# EUROPEAN PATENT APPLICATION

(11) **EP 4 755 192 A2**
(43) Date of publication of application: **10.06.2026**
(21) Application number: 25220259.3
(22) Date of filing: 02.12.2025
(51) Int. Cl.: A23B 4/005, A23B 4/037, A23B 4/06, A23K 10/20, A23K 50/40, A23L 13/10

(54) **METHOD FOR PRODUCING A MONOPROTEIN NUTRITIONAL PRODUCT, MONOPROTEIN NUTRITIONAL PRODUCT AND THE USE THEREOF FOR THE TREATMENT AND CONVALESCENCE OF VETERINARY PATIENTS**

(30) Priority: 05.12.2024 PL 45048724
(71) Applicant: Merzdorf Fine Food Spolka z Ograniczona Odpowiedzialnoscia, 45-839 Opole (PL)
(72) Inventor: Grudniok, Andrzej, Opole (PL)
(74) Representative: Ptasinski, Konrad Witold

(57) **Abstract**

The present invention relates to a method for producing a monoprotein nutritional product, especially for veterinary patients, comprising steps in which: a) selection (1) of meat raw material is carried out by selecting meat raw material from one type of tissue, derived from one animal, b) preliminary preparation (2) of the meat raw material is carried out, c) the meat raw material is preliminarily comminuted (3), d) the preliminarily comminuted meat raw material is freeze-dried (4) using a freeze-dryer, e) heat treatment (7) of the dried preliminarily comminuted meat raw material is carried out, f) final comminution (9) of the dried, heat-treated, preliminarily comminuted meat raw material is carried out, wherein in step d) a freeze-dryer with direct removal of water vapor by means of pumps is used, wherein step e) is carried out for at least 2h at a pressure in the range from approximately 0.4 mbar to approximately 0.5 mbar and at a product temperature of at least 72°C, and step f) comprises sieving the comminuted meat raw material through a sieve with a size of at least 120 mesh. The present invention also relates to a monoprotein nutritional product and the use of a monoprotein nutritional product.

## Description

The present invention relates to a method for producing a monoprotein nutritional product, a monoprotein nutritional product and the use of a monoprotein nutritional product for the treatment and convalescence of veterinary patients. The objects of the invention find their application in the field of veterinary medicine, especially in the process of treatment and convalescence of veterinary patients in critical conditions.

The current state of knowledge in the field of nutrition of dogs and cats in critical conditions and during the convalescence period indicates the crucial role of appropriate nutritional support in the treatment process and return to health. Studies show that early implementation of nutritional therapy can significantly improve treatment outcomes, shorten hospitalization time and reduce the risk of complications. However, previous nutritional solutions often do not meet all the requirements of veterinary patients in critical conditions, particularly in terms of ease of administration, nutritional value and acceptance by animals. This problem is particularly significant in the context of oncological patients, postoperative patients, patients with chronic diseases, as well as geriatric patients. It is therefore desired to develop an effective and versatile nutritional product which can significantly improve the treatment outcomes of veterinary patients in critical conditions, accelerate the convalescence process and facilitate the work of veterinarians.

Document EP2595495B1 discloses textured, two-component freeze-dried products and a method for their manufacture. The food product comprises a first component and a second component which form the food product, wherein the entire food product is freeze-dried and has a water content below approximately 2%, and the first component and the second component are clearly distinguishable. The first component is selected from the group consisting of yogurt or another dairy product, puree, cereal product, cheese, fruit, vegetable, meat, malt, chocolate, coffee, fish or other seafood, and combinations thereof, and the second component is selected from the group consisting of yogurt or another dairy product, puree, cereal product, cheese, fruit, vegetable, meat, malt, chocolate, coffee, fish or other seafood, and combinations thereof. The first and second components are simultaneously applied by simultaneous extrusion, wherein the first component surrounds the second component. In turn, the method for producing a freeze-dried food product comprises simultaneously extruding the first component and the second component to form the product, wherein the simultaneous extrusion occurs at a temperature in the range from approximately -5°C to approximately 10°C, and wherein the first component surrounds the second component. Subsequently, the product is cooled to a temperature below approximately -5°C, after which the product is subjected to a sublimation step for approximately 5 hours to approximately 20 hours and at a pressure in the range of approximately 0.1 to approximately 1.0 mbar. The sublimation step comprises heating the product at a temperature in the range of approximately 50°C to 120°C.

Document US4786516A discloses a method for drying meat which comprises deep frying the meat under reduced pressure, and then vacuum freeze-drying the deep-fried meat and, if necessary, preheating the meat before the above deep frying treatment. Owing to the use of the mentioned method for drying meat, dried meat is obtained which after rehydration and cooking is essentially identical to cooked fresh meat in terms of taste and texture and which does not become unpalatable as a result of breakdown of meat tissue under the influence of high temperature and pressure, such as retort processing.

Document CN106071914A discloses a method for processing freeze-dried yak meat. The method for processing freeze-dried yak meat comprises the following steps: selecting yak meat that has passed inspection and quarantine, separating the yak meat according to parts, selecting a meat portion from the processed part, cutting the meat portion into meat slices in a direction perpendicular to the muscle fibers, placing the cut meat slices under very high pressure for processing, freezing the yak meat slices at low temperature, carrying out vacuum freeze-drying of the yak meat slices, placing the freeze-dried yak meat slices in plastic bags, carrying out vacuum packaging of the plastic bags containing freeze-dried yak meat slices to form slice shapes, placing the packaged plastic bags in external packaging, storage and sale. Products prepared by the presented processing method have high nutritional and health value, unchanged taste and long shelf life.

Additionally, they are easy to store and transport and constitute a product form fully utilizing the resource of mountain yak meat.

Document EP2732712B1 discloses a method for producing dried meat-based food which is to be reconstituted by pouring hot or cold water over it before consumption. The method for producing dried food comprises a step of processing meat raw material or meat-based food by means of superheated steam. Then a step of freezing the meat raw material or meat-based food processed by means of superheated steam is carried out, followed by a step of drying the frozen meat material or meat-based food under reduced pressure. The essence of the solution is a step of adding moisture to the meat raw material or meat food, followed by superheated steam treatment, and before freezing. It is possible to reconstitute the dried food produced by this production method in a short time of approximately 3 to 5 minutes, even if the dried food is relatively thick.

The technical problem of the present invention is to provide a monoprotein nutritional product which will be intended especially for veterinary patients in critical conditions and will provide appropriate nutritional value while maintaining ease of administration and acceptance by patients. It is particularly desired to obtain a monoprotein nutritional product which can be used in various forms and will be adapted to individual patient needs, as well as will be adapted for use in nutrition of patients with difficulties in food intake, e.g. through a feeding tube. It is also desired to provide an effective and versatile monoprotein nutritional product which will improve treatment outcomes of veterinary patients in critical conditions, accelerate the convalescence process and facilitate the work of veterinarians. It is also desired to provide a monoprotein nutritional product characterized by optimal absorption and assimilation indices by veterinary patients.

The technical problem of the present invention is also to provide a method for producing a monoprotein nutritional product which will ensure stability of quality of the produced product, especially in terms of nutrients and physical parameters of the product, while being relatively simple to carry out and limiting the number of technical means necessary for its implementation.

According to the first aspect of the present invention, there is provided a method for producing a monoprotein nutritional product, especially for veterinary patients, characterized in that it comprises steps in which:
a) selection of meat raw material is carried out by selecting meat raw material from one type of tissue, derived from one animal,
b) preliminary preparation of the meat raw material is carried out,
c) the meat raw material is preliminarily comminuted,
d) the preliminarily comminuted meat raw material is freeze-dried using a freeze-dryer,
e) heat treatment of the dried preliminarily comminuted meat raw material is carried out,
f) final comminution of the dried, heat-treated, preliminarily comminuted meat raw material is carried out,
wherein in step d) a freeze-dryer with direct removal of water vapor by means of pumps is used, wherein step e) is carried out for at least 2h at a pressure in the range from approximately 0.4 mbar to approximately 0.5 mbar and at a product temperature of at least 72°C, and step f) comprises sieving the comminuted meat raw material through a sieve with a size of at least 120 mesh.

The preliminary preparation of the meat raw material in step b) comprises removal of undesired parts of the meat raw material, comprising cartilage, bones, membranes, fat, skin residues.

Preferably, step c) is carried out using a dicing machine.

Preferably, in step c) the meat raw material is preliminarily comminuted to the form of cubes with dimensions from 6 mm x 12 mm x 6 mm to 12 mm x 12 mm x 10 mm.

Preferably, step d) comprises a freezing phase and a drying phase, wherein the freezing phase is carried out at a pressure in the freeze-dryer chamber of 0.7 mbar and at a heating medium temperature of 10°C, for a time in the range from 1h to 2h, and the drying phase is carried out at a pressure in the freeze-dryer chamber in the range from 1 mbar to 2 mbar and at a heating medium temperature in the range from 40°C to 85°C, for a time in the range from 16h to 40h.

Preferably, after step e) a cooling step is carried out, wherein the cooling step is carried out at a pressure in the freeze-dryer chamber of 0.2 mbar and at a heating medium temperature in the range from 50°C to 70°C, for a time in the range from 20 min to 60 min.

Preferably, step f) is carried out in a twin-screw grinder, the outer linings of which comprise a sieve with a size of 120 mesh.

Preferably, after step f) a step of packaging the monoprotein nutritional product in single-dose packages is carried out, preferably from high-barrier laminate with an EVOH layer, preferably with a mass of approximately 10 g.

Preferably, the step of packaging the monoprotein nutritional product is carried out in a protective gas atmosphere.

Preferably, step d) and step e) are carried out in the same freeze-dryer.

Preferably, the cooling step is carried out in the same freeze-dryer.

Preferably, the meat raw material selected in step a) is selected from the group comprising chicken breast fillet, turkey breast fillet, chicken liver.

According to the second aspect of the present invention, there is provided a monoprotein nutritional product, especially for veterinary patients, characterized in that it is a micronized and freeze-dried form of meat of one type of tissue, derived from one animal, wherein the monoprotein nutritional product has a moisture content of not more than 3% and has a powdery form with a particle size of not more than 125 µm.

Preferably, the monoprotein nutritional product has a protein content above 75%.

Preferably, the meat is selected from the group comprising chicken breast fillet, turkey breast fillet, chicken liver.

According to the third aspect of the present invention, there is provided the use of a monoprotein nutritional product, as defined in the second aspect of the invention, for the treatment and convalescence of veterinary patients, especially patients in critical condition, including oncological patients, postoperative patients, patients with chronic diseases, geriatric patients.

The method for producing a monoprotein nutritional product according to the present invention, owing to the combination of selection of high-quality raw material (human grade meat) with advanced freeze-drying technology, allows preservation of nutritional values while ensuring long shelf life and ease of use. The use of a freeze-dryer with direct removal of water vapor by means of pumps, without capturing it on a collector in the form of ice, ensured the highest product quality and the best absorption and assimilation parameters in clinical tests. The use of an advanced sublimation drying process (freeze-drying) with direct removal of water vapor by means of vacuum pumps additionally guarantees preservation of the structural and functional integrity of nutrients. Comminution of the monoprotein nutritional product to obtain a powdery form (on a sieve with a size of 120 mesh) ensured optimal contact surface area of the monoprotein nutritional product particles with proteolytic and amylolytic enzymes of the digestive system, which translates into better bioavailability of nutrients. The powdery form also enables easy adjustment of the consistency of the monoprotein nutritional product to individual patient needs by adding an appropriate amount of liquid, which constitutes the universality of the present product. The monoprotein nutritional product according to the invention, owing to obtaining a powdery form with particle sizes below 125 µm, is easily soluble in water and allows wide modification of the density of the nutritional mixture, as well as can be administered through feeding tubes with a size from 5 Fr, without clogging their outlet openings. The hydrated powdery form of the monoprotein nutritional product increases its digestibility and assimilability, which is particularly important for patients with impaired digestive tract function. In turn, the possibility of administration through a gastric tube, oral syringe or ad libitum facilitates adaptation of the feeding method to the patient's condition.

The monoprotein nutritional product according to the present invention shows high effectiveness in improving the nutritional status of veterinary patients in critical conditions. The use of the monoprotein nutritional product in the treatment and convalescence process of veterinary patients contributed to shortening of hospitalization time by an average of 1.5 days in postoperative patients and reduction of the incidence of postoperative complications by 25%. High protein content and ease of use contribute to faster convalescence and improvement of the clinical condition of patients. The monoprotein nutritional product is also well tolerated and accepted by both patients and veterinarians. The monoprotein nature of the product according to the invention ensures high digestibility and bioavailability of exogenous amino acids, which is crucial for patients with digestion and absorption disorders. The monoprotein nutritional product constitutes a significant supplement to existing methods of nutritional support for veterinary patients in critical conditions. High protein content (77.0-89.3%) meets the needs of patients in catabolic states, which is consistent with current nutritional recommendations for animals in critical conditions. Low moisture content (0.7-2.8%) enables long-term storage of the product without the need to use preservatives, which is important from the point of view of food safety. Moreover, the absence of functional additives and potential allergens minimizes the risk of hypersensitivity reactions in patients with reduced immune system function. Additionally, packaging in a protective atmosphere in hermetic single-dose sachets with a small mass (such as 10 g) minimizes the risk of microbiological contamination and lipid oxidation, eliminating the need to use special storage conditions.

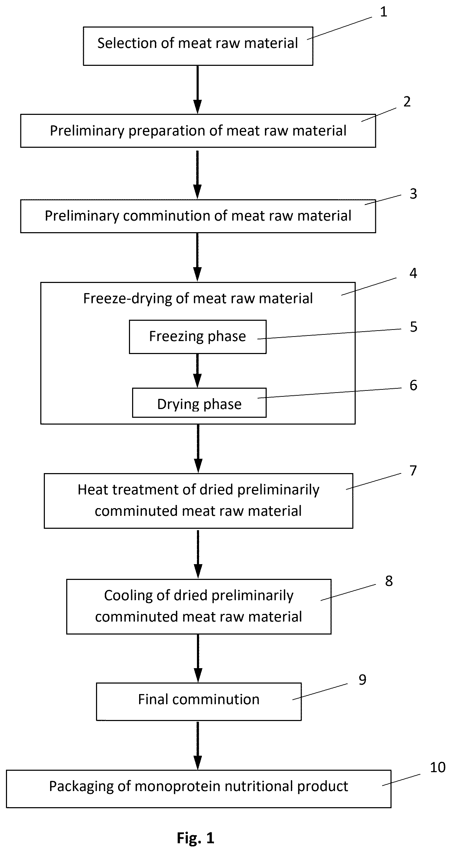

The solution according to the invention has been presented in the following embodiments and has been illustrated in the drawing, in which Fig. 1 shows a block diagram of the method for producing a monoprotein nutritional product according to the present invention.

### Example 1

An embodiment of the method for producing a monoprotein nutritional product according to the present invention has been illustrated in Fig. 1 in the form of a block diagram.

The method for producing a monoprotein nutritional product according to the present invention begins with a step of selection 1 of high-quality meat. Preferably, in the selection step 1, meat intended for human consumption is selected, characterized by one type of tissue and derived from one animal. This embodiment of the invention presents implementations based on three raw materials, which are: chicken breast fillet, turkey breast fillet and chicken liver. It should be noted, however, that the invention is not limited to the presented meat raw materials, and in alternative embodiments it is possible to use other raw materials, on condition of maintaining high quality, one type of tissue and one animal source. After the step of selection 1 of the meat raw material, a step of preliminary preparation 2 of the meat raw material follows. In this step, removal of undesired parts of the meat raw material occurs, such as cartilage, bones, membranes (so-called silver skin), fat, skin residues. This step is realized in manual operations. After preliminary preparation 2 of the meat raw material, a step of preliminary comminution 3 of the meat raw material follows. In this step, comminution of the meat raw material into particles with a size in the range from 6 mm to 12 mm occurs. The step of preliminary comminution 3 of the meat raw material is preferably carried out using a dicing machine, containing a cutting screen with a size from 6 mm x 12 mm to 12 mm x 12 mm with a feed of approximately from 6 mm to 10 mm. As a result, preliminarily comminuted meat raw material is obtained having the form of cubes with dimensions from 6 mm x 12 mm x 6 mm to 12 mm x 12 mm x 10 mm.

In the next step, the preliminarily comminuted meat raw material thus obtained is introduced into a freeze-dryer. Importantly, the freeze-dryer used in the present invention is a device in which all shelves are in one heating medium circuit, therefore they have the same temperature, and moreover the freeze-dryer operates not on the principle of capturing sublimating water vapor on a collector in the form of ice, but with direct removal of it to the outside (for example operating based on the power of installed vacuum pumps). A non-limiting example of a freeze-dryer meeting the assumptions indicated above is the Buddy 14 freeze-dryer supplied by hegatec Engineering GmbH. The mentioned freeze-dryer comprises 14 shelves with a surface area of approximately 1 m², wherein each shelf accommodates two trays with a surface area of approximately 0.5 m². The preliminarily comminuted meat raw material is therefore evenly distributed on 28 trays, which are placed on the freeze-dryer shelves, after which the freeze-drying process of the preliminarily comminuted meat raw material is initiated. In the freeze-drying step 4 of the preliminarily comminuted meat raw material, a freezing phase 5 of the preliminarily comminuted meat raw material occurs, in which at a set pressure of approximately 0.7 mbar, heating medium with a temperature of approximately 10°C is supplied to the shelves. During pressure reduction (by pumping out air from the freeze-dryer chamber), the preliminarily comminuted meat raw material undergoes freezing already from the level of 6 mbar, while the achievement of a pressure of approximately 0.7 mbar itself guarantees a temperature of the frozen preliminarily comminuted meat raw material at a level of approximately -24°C. In the freeze-dryer used, which operates on the principle of continuous air pumping, and not on capturing vapor on a collector freezing it, this allows for resignation from refrigeration installation (and use of (non-)freon gases, not neutral for the climate), and also accelerates the sublimation process itself.

After the freezing phase 5 of the preliminarily comminuted meat raw material, a drying phase 6 follows, which is realized by programmed gradual increase of the temperature of the heating medium supplied to the shelves at a rate such that the increase in the sublimation rate does not cause an uncontrolled increase in the set pressure. During this step, the pressure inside the freeze-dryer chamber is maintained in the range from approximately 1 mbar to approximately 2 mbar and the temperature is gradually increased to a value of approximately 85°C. The temperature of the preliminarily comminuted meat raw material is measured on one of the trays (assuming that all trays are equally filled) by means of two sensors: in the middle of the tray and in the corner area. When at the end of the drying phase 6 the temperature of the lower reading reaches 80°C, the method for producing a monoprotein nutritional product according to the present invention proceeds to the heat treatment step 7 of the meat raw material. The meat raw material dried in the freeze-drying step 4 has a significantly reduced water content, while the meat is still raw, therefore a subsequent heat treatment step 7 of the meat raw material is carried out. This step is carried out for at least 2h at a pressure in the range from approximately 0.4 mbar to approximately 0.5 mbar. This step additionally allows elimination of possible pathogens (as a result of reaching a temperature of at least 72°C, which guarantees getting rid of bacteria, fungi and viruses). The heat treatment step 7 of the dried comminuted meat raw material additionally gives an effect similar to low-temperature cooking and causes the meat to be not dried, but still raw, but already heat-treated, therefore it is much safer and gentler for the sensitive stomachs of animals exhausted by cancer or surgery, making it easily digestible.

The next step is a cooling step 8. This step is relatively short, where the shelf temperature is gradually reduced to approximately 50°C in a time from approximately 30 min to approximately 40 min. Such rapid reduction of the temperature of the dried preliminarily comminuted meat raw material partially makes it resistant to moisture absorption from the atmosphere. A typical moisture value of the dried preliminarily comminuted meat raw material after removal from the freeze-dryer is below 0.5%.

The dried preliminarily comminuted meat raw material, heat-treated and cooled, is removed from the freeze-dryer and introduced to the final comminution step 9. In the final comminution step 9, the meat raw material is ground and sieved to obtain a micronized form. The final comminution step 9 is carried out non-limitingly on a twin-screw grinder, the outer linings of which comprise a sieve with a size of 120 mesh (125 µm). As a result, a monoprotein nutritional product according to the present invention is obtained, which takes a powdery form with particles with a size below 125 µm. Such comminution of the monoprotein nutritional product influences easier preparation of a mixture for example with lukewarm water (easier mixing), no effect of clogging of the tube through which food is administered to the animal intragastrically, even in the case of the smallest tubes (no clogging down to a size of 5 Fr), easier/faster absorption of the mixture in the stomach.

The final comminution step 9 customarily causes slight absorption of moisture from the environment, whereby the monoprotein nutritional product has a final moisture content in the range from approximately 0.7% to approximately 3%.

After obtaining the powdery form of the monoprotein nutritional product according to the present invention, it is introduced to a packaging step 10, which is realized in a packaging device intended for products in finely comminuted form, i.e. powdery. The monoprotein nutritional product is packaged 10 in single doses with a mass of approximately 10 g, in sachets made of high-barrier laminate with an EVOH layer. Preferably, packaging 10 is carried out in a protective atmosphere, for example in a gas mixture of 30% CO₂ and 70% N₂. Individual packaging 10 in doses with a mass of approximately 10 g allows for easier dosing and calculation of protein and fat content, control of the amount of added liquid, and thereby calculation of the water balance of the fed animal (in the case of cats this is very important), smaller losses of unused product, as well as the possibility of preparation by the physician of a mixture of two (or more) products in a situation where it would be necessary to use individually selected proportions of nutritional values.

### Example 2

According to the method for producing a monoprotein nutritional product according to the present invention presented in Example 1, three monoprotein nutritional products constituting embodiments of the invention were produced. In the first selection step 1, the following meat raw materials were selected: chicken breast fillet, turkey breast fillet and chicken liver. Each selected meat raw material was individually subjected to the next step of preliminary preparation 2 of the meat raw material by cutting off undesired parts of the meat raw material. After the step of preliminary preparation 2 of the meat raw material, 180 kg of chicken breast fillet, 360 kg of turkey breast fillet and 180 kg of chicken liver were obtained. All meat raw materials were human grade raw materials, from one type of tissue and one animal source. Then the preliminarily prepared meat raw materials were individually subjected to the next step of preliminary comminution 3 of the meat raw material. In this step, an automatic dicing machine was used, wherein the chicken breast fillet was cut into particles with dimensions from 12 mm x 12 mm x 10 mm, the turkey breast fillet was cut into particles with dimensions from 6 mm x 12 mm x 10 mm, and the chicken liver was cut into particles with dimensions of 6 mm x 12 mm x 6 mm.

The preliminarily comminuted meat raw material thus prepared was introduced into a Buddy 14 freeze-dryer and the freeze-drying process 4 was carried out individually for each meat raw material. The chicken breast fillet was evenly distributed on 28 trays, wherein on each tray approximately 6.5 kg of preliminarily comminuted chicken breast fillet was arranged. The turkey breast fillet was evenly distributed on 28 trays, wherein on each tray approximately 13 kg of preliminarily comminuted turkey breast fillet was arranged. The chicken liver was evenly distributed on 28 trays, wherein on each tray approximately 6.5 kg of preliminarily comminuted chicken liver was arranged.

The freeze-drying step 4 of the preliminarily comminuted chicken breast fillet was carried out according to the scheme presented in Table 1, where program step means the next programmed step of the freeze-dryer control system, T denotes the temperature of the heating agent supplied to the trays, and p denotes the pressure in the freeze-dryer chamber.

The freeze-drying step of the preliminarily comminuted turkey breast fillet was carried out according to the scheme presented in Table 2, where program step means the next programmed step of the freeze-dryer control system, T denotes the temperature of the heating agent supplied to the trays, and p denotes the pressure in the freeze-dryer chamber.

The freeze-drying step of the preliminarily comminuted chicken liver was carried out according to the scheme presented in Table 3, where program step means the next programmed step of the freeze-dryer control system, T denotes the temperature of the heating agent supplied to the trays, and p denotes the pressure in the freeze-dryer chamber.

**Table 1. Scheme of freeze-drying step and heat treatment step for chicken breast fillet**

| Step/phase | program step | time in h | T [°C] | p [mbar] |
|---|---|---|---|---|
| Freezing | 1 | 01:00 | 10 | 0.7 |
| Drying | 2 | 08:00 | 40 | 1.0 |
| | 3 | 04:00 | 60 | 1.0 |
| | 4 | 02:00 | 70 | 1.0 |
| | 5 | 02:00 | 80 | 0.7 |
| | 6 | 02:00 | 85 | 0.7 |
| Heat treatment | 7 | 02:00 | 85 | 0.4 |
| | 8 | 02:00 | 80 | 0.4 |
| Cooling | 9 | 00:20 | 70 | 0.2 |
| | 10 | 00:20 | 60 | 0.2 |
| | | 0d + | | |
| | | 23:40 | | |

**Table 2. Scheme of freeze-drying step and heat treatment step for turkey breast fillet**

| Step/phase | program step | time in h | T [°C] | p [mbar] |
|---|---|---|---|---|
| Freezing | 1 | 01:30 | 10 | 0.7 |
| Drying | 2 | 16:00 | 40 | 1.0 |
| | 3 | 16:00 | 60 | 1.0 |
| | 4 | 04:00 | 70 | 1.0 |
| | 5 | 01:00 | 80 | 0.7 |
| | 6 | 02:00 | 85 | 0.7 |
| Heat treatment | 7 | 04:00 | 85 | 0.4 |
| | 8 | 02:00 | 80 | 0.4 |
| Cooling | 9 | 00:20 | 70 | 0.2 |
| | 10 | 00:20 | 60 | 0.2 |
| | | 1d + | | |
| | | 23:10 | | |

**Table 3. Scheme of freeze-drying step and heat treatment step for chicken liver**

| Step/phase | program step | time in h | T [°C] | p [mbar] |
|---|---|---|---|---|
| Freezing | 1 | 01:00 | 10 | 0.7 |
| Drying | 2 | 08:00 | 40 | 1.8 |
| | 3 | 06:00 | 60 | 1.8 |
| | 4 | 03:00 | 70 | 1.8 |
| | 5 | 02:00 | 80 | 0.7 |
| | 6 | 02:00 | 85 | 0.7 |
| Heat treatment | 7 | 03:00 | 85 | 0.4 |
| | 8 | 02:00 | 80 | 0.4 |
| Cooling | 9 | 00:10 | 70 | 0.2 |
| | 10 | 00:20 | 60 | 0.2 |
| | | 1d + | | |
| | | 03:30 | | |

Each dried, heat-treated and preliminarily comminuted meat raw material was introduced to the final comminution step 9, where on a twin-screw grinder it was comminuted and sieved through a 120 mesh sieve, and then packaged 10 into sachets with a mass of approximately 10 g in a protective gas atmosphere. As a result, three monoprotein nutritional products constituting embodiments of the present invention were obtained, wherein each product had a moisture content in the range from 0.7% to 2.8%, and their analytical values are presented in Table 4.

**Table 4. Analytical values of embodiments of the monoprotein nutritional product**

| **Analytical values** | | Chicken liver | chicken breast fillet | turkey breast fillet |
|---|---|---|---|---|
| **Energy** | kJ | 1,684.00 | 1,444.00 | 1,441.00 |
| | kcal | 402 | 345 | 345 |
| **Protein** | % | 77.4 | 82 | 89.3 |
| **Crude ash** | % | 5.19 | 7.55 | 6.09 |
| **Fat** | % | 15.3 | 6.6 | 3.7 |
| **Crude fiber** | % | 0.7 | 0.5 | <0.2 |
| **Moisture** | % | 1 | 2.8 | 0.7 |
| **Metabolizable energy** - **dogs** | kJ | 1,888.00 | 1,664.00 | 1,686.00 |
| | kcal | 451 | 398 | 403 |
| **Metabolizable energy** - **cats** | kJ | 1,904.00 | 1,689.00 | 1,714.00 |
| | kcal | 455 | 404 | 410 |

### Example 3

Clinical studies were conducted on veterinary patients using the monoprotein nutritional product according to the present invention. The clinical studies comprised using the monoprotein nutritional product in patients in various clinical conditions, observations of patient reactions to the monoprotein nutritional product, monitoring of the nutritional status of patients (BCS and MCS assessment) and collection of data on acceptance of the monoprotein nutritional product and ease of its use.

As a result of the studies, three variants of the monoprotein nutritional product with varied parameters were used, adapted to different clinical needs, presented in Table 4. All monoprotein nutritional products used were characterized by a powdery form, packaged in high-barrier laminates in a neutral gas atmosphere, which provided benefits in the form of the possibility of long-term storage at room temperature without the need to use preservatives, ease of use and adaptation to individual patient needs. When administering the monoprotein nutritional product according to the invention to patients, the powdery form was dissolved in water, which allowed obtaining a hydrated consistency adapted to a specific application and ease of selecting the appropriate density of the mixture depending on the patient's condition and method of administration (orally or through a tube).

As a result of the conducted studies, the following level of acceptance of the monoprotein nutritional product by patients was found: 85% of patients willingly accepted the monoprotein nutritional product administered orally, 95% of patients tolerated the monoprotein nutritional product administered through a feeding tube.

The use of chicken and turkey meat of human grade quality, class A, in the product had significant importance for the effectiveness of nutritional therapy in veterinary patients in critical conditions. The high quality of the raw material translates directly into better digestibility and assimilability of nutrients, which is crucial for patients with reduced digestive tract function. Poultry meat of human grade quality is characterized by high content of easily assimilable protein and a favorable amino acid profile. In the case of chicken, the protein content reaches 82.0%, and in the case of turkey 89.3%, which provides the patient's body with access to a full-value source of amino acids necessary for regenerative processes. The high digestibility of this protein, reaching almost 90%, minimizes the burden on the digestive tract and facilitates nutrient absorption even in patients with digestion disorders. Additionally, poultry meat of class A is rich in branched-chain amino acids (BCAA), which play a key role in anabolic processes, supporting muscle tissue reconstruction and improving nitrogen balance in patients in catabolic states. This is particularly important in the context of preventing loss of muscle mass, which is a common problem in patients in critical conditions. The low fat content in the product from poultry meat (6.6% in chicken and 3.7% in turkey) with simultaneously high energy density makes the monoprotein nutritional products according to the invention ideal for patients requiring a high-energy diet, but with limited fat content, e.g. in cases of pancreatitis. The hydrated form of the monoprotein nutritional product, obtained by dissolving the powdery form in water, additionally increases the bioavailability of nutrients. Fine particles of poultry meat are more easily digested and absorbed by the body, which is particularly important in patients with impaired digestive tract function. Studies have shown that food comminution can increase dry matter digestibility by even 18.7% and protein digestibility by 11%. The use of high-quality poultry meat in the product contributes to faster patient convalescence. The high content of easily assimilable protein supports wound healing processes, strengthens the immune system and accelerates tissue regeneration. Moreover, poultry meat is a source of important microelements, such as zinc and selenium, which play an important role in immune and antioxidant processes, which is particularly important for patients in critical conditions. In summary, the use of chicken and turkey meat of human grade quality, class A, in the monoprotein nutritional product constitutes a key element of effective nutritional therapy. The high digestibility, assimilability and favorable nutritional profile of these raw materials contribute to faster convalescence of veterinary patients in critical conditions, supporting regenerative processes and minimizing metabolic burden on the body.

In 70% of patients, an improvement in BCS assessment by at least 1 point within 2 weeks of using the monoprotein nutritional product according to the invention was observed. In 65% of patients, an improvement in MCS assessment by at least 1 point within 3 weeks of using the monoprotein nutritional product according to the invention was observed.

In the conducted studies, clinical effects were obtained in the form of shortening of hospitalization time by an average of 1.5 days in postoperative patients receiving the monoprotein nutritional product according to the invention, reduction of the incidence of postoperative complications by 25% compared to historical data, improvement of appetite in 80% of oncological patients.

From among patients subjected to clinical studies, two cases were selected, which are described below:
Case 1: Cat, 8 years old, after intestinal tumor removal surgery
   - Quick return of appetite (2 days after surgery)
   - Improvement in BCS from 3/9 to 5/9 within 3 weeks
   - No postoperative complications
Case 2: Dog, 12 years old, cachexia in the course of kidney failure
   - Gradual improvement of appetite
   - Increase in body weight by 8% within 4 weeks
   - Improvement of kidney parameters (reduction of creatinine by 15%)

The study results indicate effective use of the monoprotein nutritional product according to the present invention in clinical nutrition of animals. Shortening of hospitalization time by an average of 1.5 days in postoperative patients is consistent with earlier studies indicating benefits from early implementation of nutritional support. Reduction of the incidence of postoperative complications by 25% emphasizes the importance of appropriate nutrition in the healing and convalescence process.

Physical form and chemical composition have a significant impact on the kinetics of digestion and absorption of nutrients in the monoprotein nutritional product according to the invention. Micronization of the monoprotein nutritional product accelerates enzymatic hydrolysis of proteins and carbohydrates, which results in faster absorption of amino acids and monosaccharides in the small intestine. Fine particles minimize the burden on stomach and intestinal motility, which is particularly important in patients with peristalsis disorders or gastroparesis.

## Claims

1. A method for producing a monoprotein nutritional product, especially for veterinary patients, **characterized in that** it comprises steps in which:
**a)** selection (1) of meat raw material is carried out by selecting meat raw material from one type of tissue, derived from one animal,
**b)** preliminary preparation (2) of the meat raw material is carried out,
**c)** the meat raw material is preliminarily comminuted (3),
**d)** the preliminarily comminuted meat raw material is freeze-dried (4) using a freeze-dryer,
**e)** heat treatment (7) of the dried preliminarily comminuted meat raw material is carried out,
**f)** final comminution (9) of the dried, heat-treated, preliminarily comminuted meat raw material is carried out,
wherein in step d) a freeze-dryer with direct removal of water vapor by means of pumps is used, wherein step e) is carried out for at least 2h at a pressure in the range from approximately 0.4 mbar to approximately 0.5 mbar and at a product temperature of at least 72°C, and step f) comprises sieving the comminuted meat raw material through a sieve with a size of at least 120 mesh.

2. The method for producing a monoprotein nutritional product according to claim 1, **characterized in that** step c) is carried out using a dicing machine.

3. The method for producing a monoprotein nutritional product according to claim 1 or 2, **characterized in that** in step c) the meat raw material is preliminarily comminuted to the form of cubes with dimensions from 6 mm x 12 mm x 6 mm to 12 mm x 12 mm x 10 mm.

4. The method for producing a monoprotein nutritional product according to any of claims 1 - 3, **characterized in that** step d) comprises a freezing phase (5) and a drying phase (6), wherein the freezing phase (5) is carried out at a pressure in the freeze-dryer chamber of 0.7 mbar and at a heating medium temperature of 10°C, for a time in the range from 1h to 2h, and the drying phase (6) is carried out at a pressure in the freeze-dryer chamber in the range from 1 mbar to 2 mbar and at a heating medium temperature in the range from 40°C to 85°C, for a time in the range from 16h to 40h.

5. The method for producing a monoprotein nutritional product according to any of claims 1 - 4, **characterized in that** after step e) a cooling step (9) is carried out, wherein the cooling step (9) is carried out at a pressure in the freeze-dryer chamber of 0.2 mbar and at a heating medium temperature in the range from 50°C to 70°C, for a time in the range from 20 min to 60 min.

6. The method for producing a monoprotein nutritional product according to any of claims 1 - 5, **characterized in that** step f) is carried out in a twin-screw grinder, the outer linings of which comprise a sieve with a size of 120 mesh.

7. The method for producing a monoprotein nutritional product according to any of claims 1 - 6, **characterized in that** after step f) a step (10) of packaging the monoprotein nutritional product in single-dose packages is carried out, preferably from high-barrier laminate with an EVOH layer, preferably with a mass of approximately 10 g.

8. The method for producing a monoprotein nutritional product according to claim 7, **characterized in that** the step (10) of packaging the monoprotein nutritional product is carried out in a protective gas atmosphere.

9. The method for producing a monoprotein nutritional product according to any of claims 1 - 8, **characterized in that** step d) and step e) are carried out in the same freeze-dryer.

10. The method for producing a monoprotein nutritional product according to claim 9, **characterized in that** the cooling step (9) is carried out in the same freeze-dryer.

11. The method for producing a monoprotein nutritional product according to any of claims 1 - 10, **characterized in that** the meat raw material selected in step a) is selected from the group comprising chicken breast fillet, turkey breast fillet, chicken liver.

12. A monoprotein nutritional product, especially for veterinary patients, **characterized in that** it is a micronized and freeze-dried form of meat of one type of tissue, derived from one animal, wherein the monoprotein nutritional product has a moisture content of not more than 3% and has a powdery form with a particle size of not more than 125 µm.

13. The monoprotein nutritional product according to claim 12, **characterized in that** it has a protein content above 75%.

14. The monoprotein nutritional product according to claim 12 or 13, **characterized in that** the meat is selected from the group comprising chicken breast fillet, turkey breast fillet, chicken liver.

15. Use of a monoprotein nutritional product, as defined in any of claims 12 - 14, for the treatment and convalescence of veterinary patients, especially patients in critical condition, including oncological patients, postoperative patients, patients with chronic diseases, geriatric patients.
